(19) Europäisches Patentamt

European Patent Office

Office européen des brevets

(11) Veröffentlichungsnummer: **0 311 921 B1**

(12) **EUROPÄISCHE PATENTSCHRIFT**

(45) Veröffentlichungstag der Patentschrift: **15.09.93**

(21) Anmeldenummer: **88116626.8**

(22) Anmeldetag: **07.10.88**

(51) Int. Cl.⁵: **G11B 15/10**

(54) **Magnetische Schaltvorrichtung für einen Servoantrieb eines Cassettenrecorders.**

(30) Priorität: **13.10.87 DE 3734605**

(43) Veröffentlichungstag der Anmeldung:
**19.04.89 Patentblatt 89/16**

(45) Bekanntmachung des Hinweises auf die
Patenterteilung:
**15.09.93 Patentblatt 93/37**

(84) Benannte Vertragsstaaten:
**DE ES FR GB IT SE**

(56) Entgegenhaltungen:
**EP-A- 0 174 677**
**DE-A- 2 927 299**
**GB-A- 948 650**
**US-A- 3 584 878**

(73) Patentinhaber: **Blaupunkt-Werke GmbH**
**Postfach 77 77 77, Robert-Bosch-Strasse 200**
**D-31132 Hildesheim(DE)**

(72) Erfinder: **Birth, Gerhard**
**Dethmarstrasse 25**
**D-3200 Hildesheim(DE)**

(74) Vertreter: **Eilers, Norbert, Dipl.-Phys.**
**Blaupunkt-Werke GmbH, Patente und Lizen-**
**zen, Postfach 77 77 77**
**D-31132 Hildesheim (DE)**

## Beschreibung

Die Erfindung betrifft eine magnetisch gesteuerte Rastvorrichtung für ein in Raststellung arretierbares Schaltrad, insbesondere für einen Servoantrieb eines Cassettenrecorders für Kraftfahrzeuge.

Aus der DE-A-2.927.299 ist ein Tonrollenmechanismus für eine Camera bekannt. Dieser umfaßt zur Steuerung der Rastvorrichtung einen um einen vorgegebenen Drehpunkt verschwenkbaren Rasthebel und einen im Abstand von dem Drehpunkt angeordneten Schaltmagneten. Der Rasthebel und der Magnetanker sind gelenkig miteinander verbunden. Der Magnetanker liegt einseitig ständig an dem einen Pol des Magnetkerns des Schaltmagneten an und eine Federanordnung sorgt dafür, daß der Magnetanker nach jedem Schaltvorgang von dem anderen Pol des Magnetkerns abgehoben wird.

Schaltvorrichtungen dieser Art werden in Cassettenrecordern benötigt, um beispielsweise eine Reverseschaltung durchzuführen oder um einen Servoantrieb für eine Kopfträgerschaltung zu aktivieren, um den Kopfträger des Cassettenrecorders für den schnellen Vor- oder Rücklauf zu verschieben.

Der Erfindung liegt die Aufgabe zugrunde, eine magnetisch gesteuerte Rastvorrichtung zu schaffen, welche eine einfache Lagerung des Schalthebels ermöglicht und trotzdem einen sicheren Schaltvorgang gewährleistet.

Die Lösung dieser Aufgabe erfolgt bei der im Oberbegriff des Anspruchs 1 vorausgesetzten magnetisch gesteuerten Rastvorrichtung durch die im kennzeichnenden Teil angegebenen Merkmale.

Nachfolgend wird die Erfindung zum besseren Verständnis anhand der in der Zeichnung dargestellten Ausführungsbeispiele näher erläutert. Es zeigen:

Fig. 1       eine schematische Ansicht einer magnetischen Schaltvorrichtung in der ein Schaltrad blockierenden Stellung,

Fig. 2       eine Darstellung der magnetischen Schaltvorrichtung gemäß Fig. 1, jedoch in einer das Schaltrad freigebenden Stellung,

Fig. 3       eine Prinzip-Darstellung einer bekannten magnetischen Schaltvorrichtung zur Verdeutlichung des Zusammenhangs zwischen dem Luftspalt und dem zum Verschwenken eines Rasthebels aufzubringenden Drehmoments, und

Fig. 4 und 5       jeweils eine Darstellung entsprechend Fig. 3, jedoch unter Verwendung eines zusätzlichen Magnetankers in unterschiedlichen Ausführungsformen.

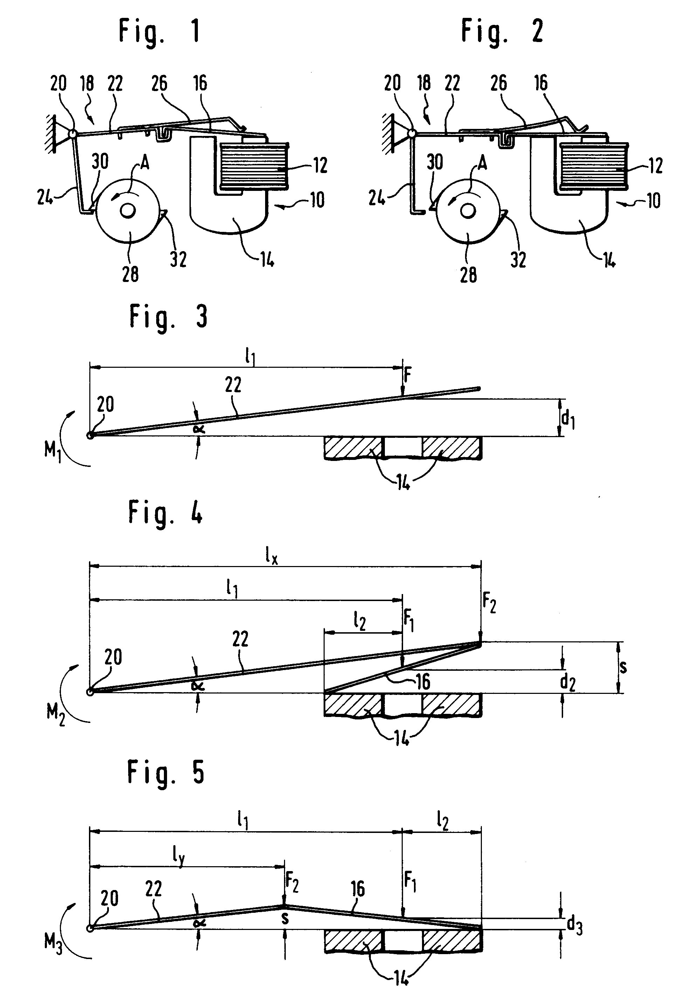

Die in Fig. 1 und 2 in unterschiedlichen Betriebszuständen dargestellte magnetische Schaltvorrichtung umfaßt einen Schaltmagnet 10 mit einer Spule 12 und dem Magnetkern 14, der in an sich bekannter Weise U-förmig ausgebildet ist.

Weiterhin ist ein um einen ortsfesten Drehpunkt 20 verschwenkbarer Rasthebel 18 mit zwei Schenkeln 22 und 24 vorgesehen. Der erste Schenkel 22 des Rasthebels 18 steht in einer Wirkverbindung mit einem Magnetanker 16, der einseitig am Magnetkern 14 anliegt. Der Magnetanker 16 und der erste Schenkel 22 des Rasthebels 18 werden durch eine Blattfeder 26 überbrückt, die der Kraft des Schaltmagneten 10 entgegenwirkt, wenn die Spule 12 von einem elektrischen Strom durchflossen wird.

Bei der in Fig. 1 gezeigten Stellung ist die Spule 12 stromlos, d.h., die Blattfeder 26 bewirkt, daß der Magnetanker 16 vom Schaltmagneten 10 abgehoben ist und der Rasthebel 18 eine Position einnimmt, in welcher das untere Ende des zweiten Schenkels 24 eine Rastnase 30 eines Schaltrades 28 hintergreift und dieses damit in einer Raststellung festhält. Dabei steht das Schaltrad 28 unter der Einwirkung einer in Richtung des Pfeiles A wirkenden Drehkraft.

Wenn die Spule 12 des Schaltmagneten 10 von einem Strom durchflossen wird, zieht der Magnetanker 16 entgegen der Wirkung der Kraft der Blattfeder 26 an, wodurch der Rasthebel 18 verschwenkt wird und die in Fig. 2 gezeigte Position einnimmt. Wie zu erkennen ist, wird dabei die Rastnase 30 des Schaltrades 28 freigegeben, so daß sich das Schaltrad unter der Einwirkung der in Richtungs des Pfeiles A wirkenden Kraft drehen und beispielsweise eine Reverse-Schaltung des hier nicht näher gezeigten Cassettenrecorders vornehmen kann.

Die Spule 12 des Schaltmagneten 10 wird nur mit einem kurzen Stromimpuls beaufschlagt, so daß der Rasthebel 18 und der Magnetanker 16 durch die Einwirkung der Kraft der Blattfeder 26 nach kurzer Zeit wieder die in Fig. 1 gezeigte Position einnehmen und dann die weitere Rastnase 32 durch den zweiten Schenkel 24 gehalten wird, wodurch eine weitere Drehung des Schaltrades 28 verhindert ist.

Der entscheidende Vorteil bei der soweit beschriebenen magnetischen Schaltvorrichtung besteht darin, daß der Schaltmagnet 10 nur eine geringe Leistung benötigt und dementsprechend wirtschaftlich und raumsparend ausgelegt werden kann, um das für das Verschwenken des Rasthebels 18 erforderliche Drehmoment zu erzeugen. Dies ist darauf zurückzuführen, daß sich bei der neuartigen Schaltvorrichtung ein kleiner Luftspalt zwischen dem Magnetanker 16 und dem Schaltmagneten 10 realisieren läßt, was nachfolgend anhand von Fig. 3 - 5 näher erläutert wird.

Fig. 3 zeigt zunächst zum besseren Verständnis die Verhältnisse bei einer bekannten magnetischen Schaltvorrichtung, bei welcher kein gesonderter Magnetanker vorgesehen ist, d.h., hier bildet der Schenkel 22 des Rasthebels den Magnetanker selbst.

Durch den Schaltmagneten 10 mit seinem Magnetkern 14 muß beim Verschwenken des Schenkels 22 um den Winkel $\alpha$ ein Drehmoment $M_1$ gemäß der nachfolgenden Beziehung aufgebracht werden:

$$M_1 \sim \frac{1}{l_1 \cdot \tan^2\alpha}$$

Dabei muß der relativ große Luftspalt $d_1$ überwunden werden, was eine relativ aufwendige Dimensionierung des Schaltmagneten 10 bedingt.

Fig. 4 zeigt eine Ausführung mit einem zusätzlichen Magnetanker 16, der einseitig innen - an der dem Drehpunkt 20 zugewandten Seite - am Magnetkern 14 anliegt und mit dem Rasthebel 22 verbunden ist. Wie zu erkennen ist, ergibt sich durch den zusätzlichen Magnetanker 16 ein wesentlich geringerer Luftspalt $d_2$. Für das Drehmoment $M_2$ gilt hier - den gleichen Winkel $\alpha$ vorausgesetzt - die Beziehung:

$$M_2 \sim \frac{l_x - l_1 + l_2}{\tan^2\alpha \cdot l_x \cdot l_2}$$

Wegen des geringeren Luftspalts $d_2$ läßt sich also bei Verwendung eines gleichen Schaltmagneten 10 gegenüber der Lösung in Fig. 1 ein größeres Drehmoment erzielen. Dies bedeutet umgekehrt, daß für das Aufbringen des Drehmomentes $M_1$ in Fig. 3 eine geringere Dimensionierung des Schaltmagneten 10 möglich ist.

Ein weiteres Ausführungsbeispiel der Erfindung ist in Fig. 5 dargestellt. Dort liegt der Magnetanker 16 außen - also an der dem Drehpunkt 20 abgewandten Seite - am Magnetkern 14 an, und bei gleichem Winkel $\alpha$ ergibt sich hier ein noch geringerer Luftspalt $d_3$. Für das Drehmoment $M_3$ gilt hier die Beziehung:

$$M_3 \sim \frac{l_1 - l_y + l_2}{\tan^2\alpha \cdot l_y \cdot l_2}$$

Das Drehmoment $M_3$ ist sowohl größer als $M_2$ und als $M_1$, so daß bei dieser Lösung eine noch geringere Dimensionierung des Schaltmagneten 10 möglich ist, um das erforderliche Drehmoment zum Verschwenken des Rasthebels 18 zu erzeugen.

Die in Fig. 1 und 2 gezeigte Blattfeder 26 sorgt einerseits für die Fixierung und Führung des Magnetankers 16, und andererseits sorgt sie für die notwendige Kraft, um den Magnetanker 16 vom Magnetkern 14 abzuheben und den Rasthebel 18 wieder in die Rastposition zu bringen.

Bei gleichem Drehwinkel $\alpha$ (also bei gleichem Entriegelungshub) des Rasthebels 18 braucht bei der neuartigen magnetischen Schaltvorrichtung nur ein relativ geringer Bruchteil des Luftspalts gemäß der bekannten Lösung nach Fig. 3 überwunden zu werden.

Die Blattfeder 26 ist gemäß den Darstellungen in Fig. 1 und 2 formschlüssig mit dem Rasthebel 18 verbunden - z.B. geklipst - und stützt sich auf dem Mangnetanker 16 ab, so daß dieser einseitig am Magnetkern 14 anliegt und mit der anderen Seite in eine Tasche des Schenkels 22 des Rasthebels 18 greift. Das freie Ende der Blattfeder 26 greift mit zwei Lappen seitlich über den Magnetanker 16, wodurch dieser geführt wird.

## Patentansprüche

1. Magnetisch gesteuerte Rastvorrichtung für ein in Raststellung arretierbares Schaltrad (28), insbesondere für einen Servoantrieb eines Cassettenrecorders für Kraftfahrzeuge, mit einem um einen vorgegebenen Drehpunkt verschwenkbaren Rasthebel (18) und einem im Abstand von dem Drehpunkt angeordneten Schaltmagneten (10), bei dem der Rasthebel und der Magnetanker (16) des Schaltmagneten gelenkig miteinander verbunden sind und der Magnetanker ständig einseitig an einem Pol des Magnetkerns des Schaltmagneten anliegt, ferner mit einer Federanordnung, die den Magnetanker nach jedem Schaltvorgang von dem anderen Pol des Magnetkerns abhebt, dadurch gekennzeichnet, daß die Federanordnung eine Blattfeder (26) umfaßt, die mit dem einen Ende mit dem Rasthebel (18) formschlüssig verbunden ist und sich mit dem freien Ende auf den Magnetanker (16) abstützt.

**Claims**

1. Magnetically controlled catch device for a switch wheel (28) which can be held in a locked position, particularly for a servo drive of a cassette recorder for motor vehicles, which comprises a catch lever (18) pivotable about a predetermined pivot point and a switch magnet (10) disposed at a distance from the pivot point, wherein the catch lever and the magnet armature (16) of the switch magnet are pivotally connected together and the magnet armature lies continuously against one pole of the magnet core of the switch magnet, and further comprises a spring arrangement which lifts the magnet armature off the other pole of the magnet core after each switch operation, characterised in that the spring arrangement comprises a leaf spring (26) which is positively connected by its one end to the catch lever (18) and by its free end is supported on the magnet armature (16).

**Revendications**

1. Dispositif d'encliquetage à commande électromagnétique pour une roue de commutation (28) susceptible d'être bloquée en position d'encliquetage, notamment pour un entraînement asservi d'un enregistreur à cassette de véhicule automobile, comprenant un levier d'encliquetage (18) pivotant autour d'un centre de rotation prédéterminé et d'un électro-aimant de commutation (10) monté à une certaine distance du centre de rotation, le levier d'encliquetage et l'induit (16) de l'électro-aimant de commutation étant reliés de manière articulée l'un à l'autre et l'induit s'appliquant en permanence d'un côté contre un pôle du noyau de l'électro-aimant de commutation avec en outre un dispositif à ressort qui soulève l'induit par rapport à l'autre pôle du noyau de l'électro-aimant, après chaque commutation, dispositif caractérisé en ce que le montage à ressort comprend un ressort-lame (26) dont une extrémité est reliée par une liaison de forme au levier d'encliquetage (18) et dont l'extrémité libre s'appuie sur l'induit (16).

Fig. 1

Fig. 2

Fig. 3

Fig. 4

Fig. 5